Europäisches Patentamt

(19) European Patent Office

Office européen des brevets

(11) Numéro de publication: **0 077 745 B1**

(12) **FASCICULE DE BREVET EUROPEEN**

(45) Date de publication du fascicule du brevet: **29.08.84**

(21) Numéro de dépôt: **82420145.3**

(22) Date de dépôt: **19.10.82**

(51) Int. Cl.³: **C 12 G 3/08**

(54) Modification de la composition de boissons alcoolisées obtenus par fermentation de fruits par utilisation de CO2 liquide.

(30) Priorité: **21.10.81 FR 8120006**

(43) Date de publication de la demande:
**27.04.83 Bulletin 83/17**

(45) Mention de la délivrance du brevet:
**29.08.84 Bulletin 84/35**

(84) Etats contractants désignés:
**BE CH DE LI**

(56) Documents cités:
**EP - A - 0 014 340**
**AU - B - 489 834**
**DE - A - 3 024 055**
**FR - A - 2 505 868**

**FOOD TECHNOLOGY, vol. 24, novembre 1970, pages 1282-1286, Chicago (USA); W.G. SCHULTZ et al.:**
*"Liquid carbon dioxide for selective aroma extraction"*

(73) Titulaire: **RHONE-POULENC S.A., 25, quai Paul Doumer, F-92408 Courbevoie (FR)**

(72) Inventeur: **Berger, Francis, Parc de Chalin, F-69130 Ecully (FR)**
Inventeur: **Cerles, Bernard, 16 rue du Commandant Faurax, F-69006 Lyon 6 (FR)**
Inventeur: **Sagi, Ferenc, 133 rue Ferdinand Buisson, F-69003 Lyon (FR)**

(74) Mandataire: **Perret, Michel et al, RHONE-POULENC RECHERCHES Service Brevets Chimie et Polymères Centre de Recherches de Saint-Fons 85, Avenue des Frères Perret B.P. 62, F-69192 St-Fons Cédex (FR)**

BUNDESDRUCKEREI BERLIN

**0 077 745**

## Description

L'invention concerne un procédé de modification de la composition de boissons alcoolisées obtenues par fermentation de fruits.

Par modification de la composition, on entend essentiellement la diminution de la teneur en éthanol de la boisson considérée, sans que cette modification n'affecte les propriétés olfactives et gustatives de ladite boisson. Il va de soi que des modifications portant sur d'autres composants peuvent aussi être enregistrées notamment sur le pourcentage d'eau qui peut varier de quelques pourcents, cette variation étant toutefois inhérente aux procédés choisis et ne résultant pas d'une concentration recherchée. Toutefois l'une des caractéristiques de l'invention est de sauvegarder globalement les aromes: le fruité et le bouquet des boissons concernées. Le fruité est cet ensemble de goûts et d'odeurs qui proviennent du fruit d'origine et qui ont tendance à disparaitre plus ou moins vite au cours du vieillissement.

Le bouquet est l'ensemble de goûts et d'odeurs qui se développent lentement au cours du vieillissement. Ces aromes sont constitués par des quantités très faibles, souvent des traces, de composés chimiques plus ou moins instables et très souvent volatils.

Sans entrer dans le détail de la composition chimique de ces aromes, on peut signaler toutefois que leur volatilité est habituellement plus importante que celle de éthanol et que leur comportement physique (solubilité par exemple dans divers solvants liquides ou gazeux) les rend facilement éliminables dès que l'on veut modifier par quelque moyen que ce soit la composition en éthanol.

Il est connu par la demande de brevet européen N° 14 340 un procédé par lequel on extrait l'alcool d'une boisson fermentée, à l'aide de $CO_2$ sous haute pression. La bière, le vin, le vin mousseux et le champagne sont indiqués comme boisson alcoolisée à traiter. Le procédé consiste à mettre en contact la boisson alcoolisée avec du $CO_2$ liquide sous une pression comprise entre 5 et 250 bars à une température comprise entre +10°C et 35°C. Si le procédé peut être tout à fait adapté au cas du traitement de la bière, il n'est pas possible par le procédé revendiqué et contrairement à ce qui y est indiqué d'obtenir des boissons désalcoolisées issues de fermentation de fruits qui conservent leurs substances aromatiques. En effet dans ce cas, toutes les substances aromatiques sont éliminées au cours de l'extraction de l'éthanol.

Les boissons désalcoolisées issues de la fermentation de fruits obtenues par ce procédé ont perdu la majorité sinon toutes leurs substances aromatiques qui sont plus volatiles et de solubilité plus grande dans le $CO_2$ que l'éthanol. Le résultat dans le cas de vin ou de cidre ou de poiré est tout à fait déplorable, d'un point de vue organoleptique contrairement au cas des bières où le goût, l'amertume et les propriétés de »bouche« sont apportées par des composés non volatils comme les tannins ou divers colloides venant de la dégradation des malts ou d'acides organiques non volatils.

Le procédé revendiqué dans cette demande de brevet, étant totalement inadapté au cas du traitement des boissons d'origine vineuse ou du type des cidres ou des poirés, il était nécessaire de trouver une méthode conduisant à de bons résultats d'un point de vue gustatif et olfactif, seule façon d'espérer remplacer au moins partiellement dans un public habitué et difficile ces boissons alcoolisées par d'autres ayant le même goût mais partiellement ou totalement désalcoolisées. Dans un pays comme la France, mais aussi dans de nombreux autres pays où l'alcoolisme sévit, il n'est pas nécessaire d'insister sur l'intérêt de telles boissons.

Dans la demande française N° 81/09 893 déposée le 14. 05. 1981 (FR-A-2 505 868) nous avons revendiqué un procédé de modification de la composition de boissons alcoolisées par extraction, au moyen d'un gaz non nocif en état supercritique sous une pression comprise entre 5 et 500 bars à une température supérieure à 35°C, des aromes ete de l'alcool puis séparation en deux phases d'une part de l'extrait alcoolique des aromes qui est réintroduit dans le résidu désalcoolisé du vin et d'autre part de l'alcool qui est retiré, cette séparation étant réalisée par oiminution de la pression du gaz supercritique qui s'est chargé des aromes et de l'alcool.

On a perfectionné ce procédé pour le rendre moins onéreux tout en augmentant encore son efficacité, en sauvegardant encore mieux les aromes, et en économisant l'énergie. Il a maintenant été trouvé un procédé de modification de la composition de boissons alcoolisées obtenues par fermentation de fruits, n'altérant pas leurs qualités gustatives et olfactives et permettant d'en abaisser la teneur en alcool par extraction de l'alcool au moyen de $CO_2$ liquide, caractérisé en ce qu'il comprend au moins deux phases d'extraction et d'isolement des extraits dans des conditions isobares et isothermes conduisant la première à un extrait riche en substances aromatiques qui sera réincorporé dans la boisson désalcoolisée et la seconde à un extrait alcoolique qui sera éliminé.

Dans ce procédé on repurifie le $CO_2$ liquide qui sert de solvant et qui s'est chargé au contact du vin des produits aromatiques légers et/ou de l'alcool au cours de deux phases'successives d'extraction, par apport de calories sans chauffer le solvant ou en ne le chauffant que très peu. Le $CO_2$ liquide devient alors gazeux et perd les substances dissoutes que l'on récupère. On condense ensuite le $CO_2$ gazeux ainsi purifié et on obtient du $CO_2$ liquide qui est recyclé.

Par boissons alcoolisées obtenues par fermentation de fruits, on entend essentiellement les boissons, gazeuses ou non obtenues à partir de jus de fruits comme les raisins, les pommes, les poires et divers autres fruits qui sont couramment utilisés pour ce faire dans divers pays. Une caractéristique

2

commune à ces boissons alcoolisées réside toutefois dans le fait que leur goût, leur arome, leur bouquet sont liés à la nature chimique des fruits d'origine et ne dépendent pas uniquement d'arome artificiellement apporté ou de traitement particulier comme par exemple dans le cas de la bière.

La modification de la composition des boissons envisagées concerne essentiellement la teneur en éthanol. Cette teneur qui peut varier selon les cas de 5 à 15 volumes % environ peut être notablement réduite par exemple à 1 ou 2% en volume mais le procédé peut permettre si on le désire de descendre à des teneurs de l'ordre de 0,5% et même en dessous. Il va de soi que plus on cherche à diminuer la teneur en éthanol et plus la technologie à mettre en œuvre est couteuse.

On utilisera de préférence comme solvant sélectif du gaz carbonique liquide. En effet, ce gaz non nocif, non polluant est peu couteux et très abondant. Sa manipulation ne nécessite aucun dispositif particulier. Il présente à l'état liquide une très bonne solubilité de composés comme les alcools ou les aromes et sa chaleur de vaporisation est très faible. Sa pression critique est de $73.10^5$ Pascals.

On pourra avantageusement l'utiliser comme solvant dans le procédé selon d'invention dans une zone de pression comprise entre 30 et 200 bars et de préférence entre 35 et 90 bars, à une température comprise entre 0 et 32°C.

Les quantités de gaz mises en œuvre peuvent être très variables car elles dépendent du volume et de la composition de boissons à traiter ainsi que des conditions du traitement et de l'appareillage. On peut globalement dire qu'il est nécessaire de mettre en œuvre des quantités comprises entre 1 et 100 parties pour 1 partie de boisson à traiter. Avantageusement dans la première phase la masse de $CO_2$ liquide mise en contact avec la boisson à traiter est inférieure à trois fois en poids la quantité de la dite boisson et dans la deuxième phase la masse de $CO_2$ liquide mis en contact avec la boisson issue de la 1ère phase est inférieure à 100 fois en poids la quantité de boisson à traiter.

La durée du traitement doit être la plus courte possible. L'emploi de $CO_2$ liquide et d'une température comprise entre 15 et 31°C permet de réduire à quelques secondes le temps de contact et d'extraction. Cependant selon que l'on opère en un procédé continu ou discontinu, ce temps pourra varier et il n'y a pas d'inconvénients à prolonger la durée du traitement à des durées pouvant aller jusqu'à plusieurs minutes.

Une particularité importante du procédé selon l'invention réside dans le choix de conditions de travail isobares. S'il est nécessaire d'amener la boisson à extraire à la pression désirée puis après l'extraction sélective à décomprimer le résidu et les extraits, ce qui est d'ailleurs le cas dans tous les procédés utilisant des gaz en état subcritique ou supercritique, par contre le fait de maintenir tout l'appareillage sous une même pression conduit à des économies sensibles d'énergie et permet l'emploi de matériel moins onéreux.

La récupération des substances dissoutes dans le $CO_2$ liquide est effectuée par apport de calories. Si l'on s'est placé dans des conditions de température et de pression très voisines des conditions critiques du $CO_2$ un très petit apport de calories suffit à modifier l'état du $CO_2$ liquide et à le ramener à l'état de gaz, état dans lequel la solubilité des extraits aromatiques et de l'alcool sont différents de ce qu'elle était dans le $CO_2$ liquide. La chaleur de vaporisation du $CO_2$ est très faible et une petite quantité de calories suffira à modifier l'équilibre. De même il suffira d'enlever peu de calories du $CO_2$ gazeux pour le ramener à l'état liquide.

Cet apport de calories peut être réalisé sans que la température du $CO_2$ liquide chargé d'arome et d'alcool s'élève. On travaille alors dans des conditions isothermes qui sauvegardent au maximum la qualité et la quantité des aromes extraits. Il est en effet impératif de conserver dans leur intégralité et sans les modifier les aromes car le goût et l'odeur d'une boisson fermentée à base de fruits sont le résultat d'un savant équilibre de composants de volatilité différente mais important.

Il va de soi que si l'apport de calories est un peu trop important la température du gaz vaporisé aura tendance à s'élever.

Les risques d'évaporation des aromes seront toutefois réduits si la température de la source de chaleur ne dépasse pas d'environ 10°C la température du solvant liquide qui se trouve en très grand excès par rapport à la quantité d'aromes et d'alcool extrait.

De plus on n'a pas intérêt à surchauffer le $CO_2$ gazeux car cela implique de développer une plus grande quantité de frigories pour le ramener ultérieurement à l'état liquide et abaisse d'autant le rendement énergétique du procédé. Toutefois il faut considérer aussi la vitesse d'évaporation du $CO_2$ liquide et il est nécessaire dans un procédé industriel que cette vitesse, liée à la quantité de calories apportée, ne soit pas trop faible. Il sera donc nécessaire de trouver un juste équilibre.

Comme nous l'avons dit plus haut une particularité essentielle du procédé réside dans le choix de conditions de travail isobares et de préférence isothermes ou se rapprochant au maximum de conditions isothermes. On travaille ainsi dans des conditions optimales d'économie d'énergie.

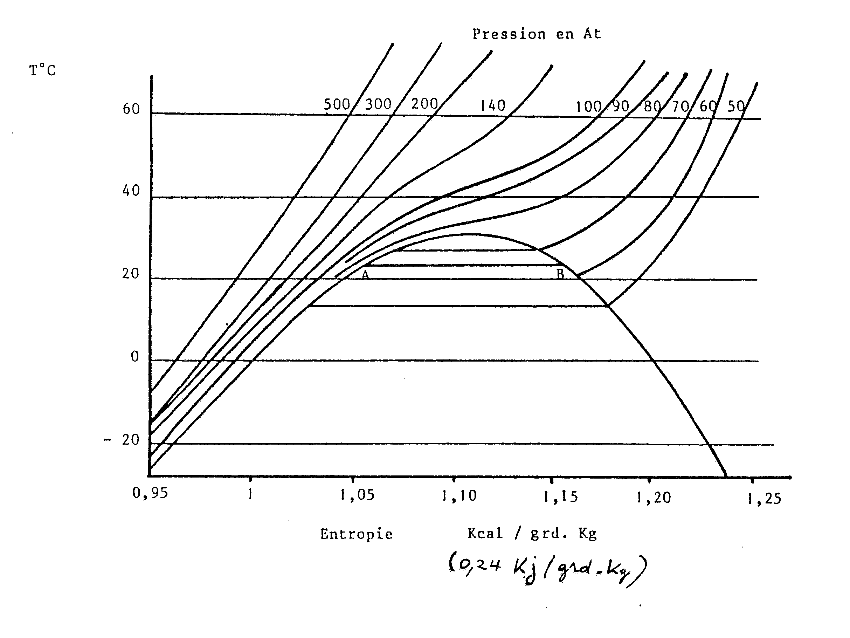

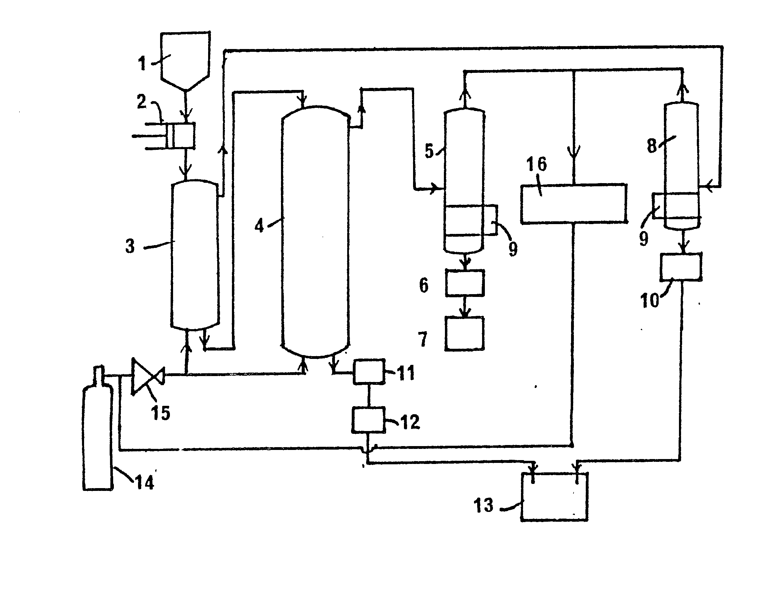

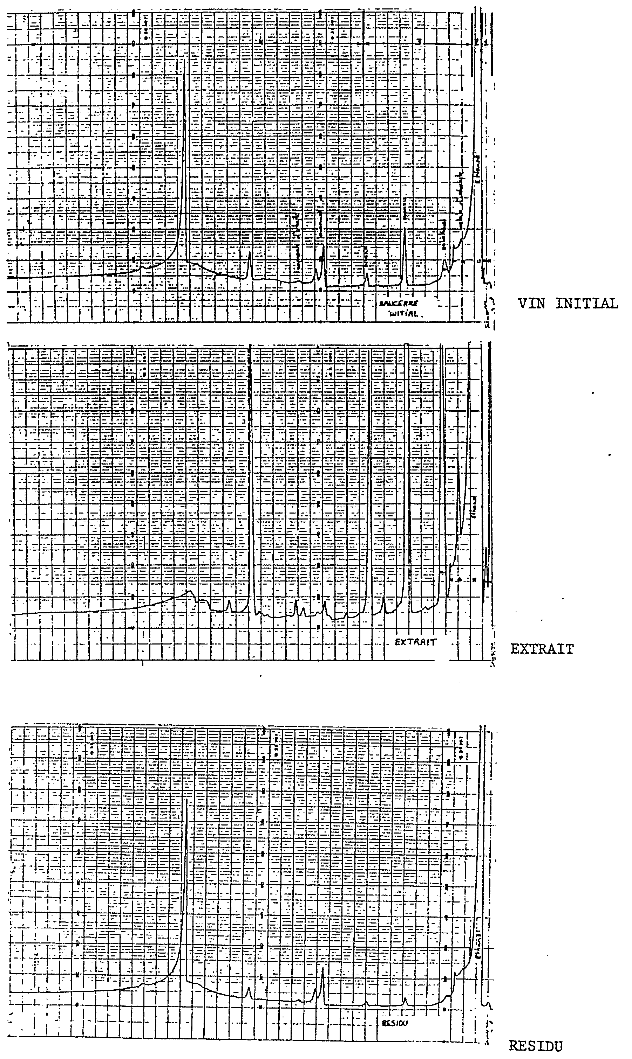

Le diagramme de la figure 1 montre le cycle caractéristique du gaz carbonique dans le diagramme de la température en fonction de l'entropie de ce gaz.

Le $CO_2$ placé dans les conditions de solvant a été porté à 23°C sous une pression de 65 atmosphères. Il se trouve sur le diagramme au point A.

Dans les réacteurs d'échange où le $CO_2$ liquide se charge des aromes et/ou d'alcool, le $CO_2$ liquide chargé reste au voisinage du point A. Quand le $CO_2$ liquide chargé des substances dissoutes passe dans le vaporisateur, appareil dans lequel il passe à l'état de vapeur sous l'action d'un apport de calories il augmente son entropie et passe, au point B. Il reste en ce point jusqu'à ce que tout le liquide se soit vaporisé et que les substances dissoutes aient été éliminées.

Lors du passage de ce $CO_2$ gazeux dans le condenseur où sous l'action d'un apport de frigories, le gaz se liquéfie, il revient au point A en diminuant son entropie.

Comme on peut le constater sur la courbe les variations d'entropie dans le cas considéré sont d'environ 0,10 K cal/grd. kg (0,418 Kj/grd. kg) ce qui est peu et justifie tout l'intérêt du procédé.

Il est d'autre part possible de combiner les apports de calories et de frigories au moyen de divers systèmes d'échange de chaleur: ceci améliore encore le rendement énergétique du procédé. En particulier le procédé permet d'utiliser des systèmes de pompes à chaleur fonctionnant entre l'évaporateur et le condenseur. On peut aussi utiliser des sources de calories de bas niveaux thermiques donc peu couteuses, par exemple: eaux de purge à 40°, eau de sortie de condenseur de centrales thermiques. Les sources de frigories sont abondantes dans la nature par exemple: eau de fleuve ou de nappe phréatique.

Le procédé selon l'invention peut être mis en œuvre de façon continue ou discontinue.

Dans le procédé en discontinu, on mélange dans un premier réacteur sous pression la boisson à traiter avec le $CO_2$ liquide que l'on y a introduit. On a intérêt, pour obtenir le meilleur contact possible entre les deux liquides à les diviser et à les agiter. De nombreuses méthodes sont connues: système de colonne à plateaux, emploi de chicanes de systèmes de type Rashig, de filtre poreux, de matière frittée etc.

Le $CO_2$ liquide se charge principalement en aromes et en éthanol. Ayant une densité plus faible il se sépare aisément et à sa sortie du réacteur on évapore le $CO_2$ liquide par apport de calories. Un premier extrait essentiellement composé des aromes et d'éthanol reste après l'évaporation du $CO_2$. La boisson ainsi traitée est introduite dans un deuxième réacteur sous pression avec du $CO_2$ liquide et l'on opère comme indiqué ci-dessus et on récupère un extrait essentiellement constitué d'éthanol et d'eau.

La boisson désalcoolisée, résidu du 2ème réacteur est alors mélangée avec le premier extrait recueilli.

Mais on a intérêt pour des raisons essentiellement technologiques et économiques à opérer de façon continue. Une façon d'opérer type pourrait être la suivante encore qu'il soit possible de prévoir diverses variantes.

A partir d'un réservoir de stockage (1) la boisson à traiter est introduite sous pression grâce à une pompe (2) dans la partie supérieure d'une première colonne (3). La colonne est adaptée pour travailler sous une pression comprise entre 35 et 90 bars. Elle est équipée d'un dispositif permettant à la fois un bon contact entre d'une part la boisson à traiter et d'autre part le $CO_2$ liquide qui est introduit à la base de cette colonne et la séparation du $CO_2$ liquide qui s'est chargé des aromes et de l'alcool et de la boisson qui a perdu ces composants.

Le $CO_2$ vient d'un réservoir sous pression (14) et est envoyé dans la colonne munie d'un dispositif d'échange grâce à une pompe (15) qui sert essentiellement à assurer la circulation du $CO_2$ liquide mais qui peut aussi recomprimer les petites quantités de $CO_2$ gazeux venant des dégazeurs (6), (10), (11) et (12) dans lesquels l'extrait aromatique, l'extrait alcoolique et la boisson désalcoolisée sont ramenés à la pression atmosphérique et débarrassés du gaz dissous. Toutefois, une fois l'appareil en régime, la majeure partie du $CO_2$ liquide provient du condenseur (16) dans lequel le $CO_2$ gazeux sous pression est liquéfié par apport de frigories.

La boisson à traiter et le $CO_2$ liquide de densité différente s'échange à contre courant dans la colonne (3). La boisson traitée est envoyée dans la partie supérieure d'une colonne (4) qui reçoit à sa base du $CO_2$ liquide. Comme dans la colonne (3), on effectue dans cette colonne (4) l'échange entre le $CO_2$ liquide et la boisson à désalcooliser. Le $CO_2$ liquide qui s'est chargé en alcool est envoyé dans une colonne (5) de préférence dans sa partie centrale. Un système de chauffage (9) permet d'apporter des calories. Il se trouve de préférence à environ une dizaine de degrés au-dessus de la température du $CO_2$ liquide. Le $CO_2$ liquide devient gazeux et on récupère l'extrait alcoolique qui est décomprimé dans un dégazeur (6) puis stocké dans un réservoir (7).

Le $CO_2$ gazeux est envoyé dans le condenseur (16) où un apport de frigories permet de reliquéfier le gaz.

Le $CO_2$ liquide qui s'est chargé en aromes dans la colonne (3) est envoyé dans une colonne (8). Un système de chauffage (9) permet d'apporter les calories nécessaires à l'évaporation du $CO_2$ liquide et on récupère l'extrait alcoolique des aromes qui est décomprimé en (10) et envoyé dans un réservoir (13).

La boisson désalcoolisée qui sort à la base de la colonne (4) est décomprimée en deux temps d'abord à environ 10 bars (11) puis à environ 1 bar (12) avant d'être envoyée dans le réservoir (13) où elle se mêle à l'extrait alcoolique des aromes.

Le $CO_2$ liquide à sa sortie du condenseur est recyclé grâce à la pompe de circulation (15).

On a indiqué plus haut que le procédé comprenait au moins deux phases.

Une série d'essais effectués avec un appareillage adapté à un procédé en discontinu nous a en effet permis d'étudier l'extraction des aromes, leur dosage quantitatif et qualitatif étant déterminé au moyen d'un chromatographe en phase gazeuse équipé d'un colonne de 2 mètres de type 5L26 chargé de Carbowax 4000 déposé sur Chromosorb 60/80®.

4

**0 077 745**

Exemple

On soumet 58,7 g de vin de Sancerre titrant 11,8° d'alcool en poids à 5 extractions successives par du $CO_2$ liquide sous 65 bars et à 23°C. On fait passer n grammes de $CO_2$ et on mesure la teneur résiduelle en alcool des résidus.
On obtient les résultats suivants:

|         | Degre d'alcool | N g DE $CO_2$ |
|---------|----------------|---------------|
| Initial | 11,8           | 0             |
| Résidu 1 | 10,3          | 200           |
| Résidu 2 | 8,7           | 400           |
| Résidu 3 | 5,8           | 800           |
| Résidu 4 | 3,4           | 1600          |
| Résidu 5 | 0,5           | 5500          |

On constate que la teneur en alcool diminue au fur et à mesure du passage du $CO_2$ et qu'il faut une quantité importante de $CO_2$ supérieure à 30 fois la masse de vin et de l'ordre du 100 fois la masse de vin si l'on veut descendre à des taux d'alcool de l'ordre de 0,5%.

On passe en chromatographie en phase gazeuse comme indiqué plus haut des échantillons du vin initial, des différents résidus successifs et des différents extraits successifs.

Les chromatogrammes des différents extraits sont exactement du même type et superposables, aux grandeurs des pics près qui sont très voisines.

Il en est de même pour les chromatogrammes des différent résidus.

On détermine par mesure des surfaces des différents pics des chromatogrammes les pourcentages des constituants qui ont été répartis en 4 catégories.

1) Substances plus volatiles que l'éthanol (aldéhydes)
2) Ethanol
3) Substances un peu moins volatiles que l'éthanol (temps d'élution compris entre celui de l'éthanol et 650 secondes comme les esters: acétate d'isobutyle ou les alcools: isobutanol, hexanol)
4) Substances très peu volatiles (temps d'élution supérieur à 650 secondes comme les acides supérieurs, les tannins etc.

On constate en comparant les chromatogrammes (figure 3) du vin non traité, du résidu et de l'extrait 1 que tous les constituants des catégories (1) et (3) se retrouvent dans l'extrait 1.

Ceci est confirmé par le tableau suivant donnant les pourcentages des constituants extraits.

| Categories de produits extraits | extrait 1 | extrait (2) + (3) | extrait 4 |
|---------------------------------|-----------|-------------------|-----------|
| 1 | 1,29   | 0,039  | 0,037  |
| 2 | 91,296 | 97,761 | 98,223 |
| 3 | 6,14   | 1,61   | 1,38   |
| 4 | 1,28   | 0,59   | 0,36   |
| total | 100 | 100 | 100 |

Si l'on considère que tout ou presque des constituants extraits des catégories 1 et 3 se retrouve dans l'extrait 1, on constate que l'extrait 1 représente 94,5% de l'extrait de catégorie 1,67% de l'extrait de catégorie 2.

5

On peut donc affirmer que le passage de 3 fois la quantité de $CO_2$ liquide par rapport au poids de vin traité permet de récupérer dans l'extrait tous les produits plus volatils que l'éthanol et les deux tiers des produits aromatiques légers.

On retrouve par contre dans le résidu 4 tous les constituants de la catégorie (4) ayant un temps d'élution supérieur à 650 s à l'exception d'un seul composé que l'on retrouve dans l'extrait 1 en grande quantité.

Quoi qu'il en soit on constate qu'une première extraction par environ trois fois le poids de $CO_2$ du vin traité suffit à enlever tous les composés volatils qui constituent l'essentiel de l'arome, mais que les composés lourds restent dans le vin désalcoolisé.

Il n'est dès lors pas nécessaire d'effectuer plusieurs extractions successives des légers bien que cela puisse être réalisé.

## Revendications

1. Procédé de modification de boissons obtenues à partir de boissons alcoolisées issues de fermentation de fruits, dont la teneur en alcool a été considérablement abaissée mais dont les qualités gustatives et olfactives n'ont pas été altérées par extraction de l'alcool au moyen de $CO_2$ liquide caractérisé en ce qu'il comprend au moins deux phases d'extraction et d'isolement des extraits dans des conditions isobares et isothermes conduisant la première à un extrait riche en substances aromatiques qui sera réincorporé dans la boisson désalcoolisée et la seconde à un extrait alcoolique qui sera éliminé.

2. Procédé selon la revendication 1 caractérisé en ce que la pression est comprise entre 35 et 90 bars et une température entre 0 et 32° C.

3. Procédé selon la revendication 1 caractérisé en ce que dans la première phase la masse de $CO_2$ liquide mise en contact avec la boisson à traiter est inférieure à trois fois en poids la quantité de la dite boisson et que dans la deuxième phase la masse de $CO_2$ liquide mis en contact avec la boisson issue de la 1ère phase est inférieure à 100 fois en poids la quantité de boisson à traiter.

4. Procédé selon la revendication 1 caractérisé en ce que l'on sépare le $CO_2$ liquide qui s'est chargé des produits aromatiques et/ou de l'alcool au cours des 2 phases successives d'extraction par apport de calories puis que l'on recycle le $CO_2$ purifié et reliquéfié.

5. Procédé selon la revendication 1 caractérisé en ce que la chaleur nécessaire à la vaporisation du $CO_2$ solvant qui s'est chargé en produits aromatiques et en alcool est échangée par tout moyen connu avec la chaleur absorbée lors de la liquéfaction du $CO_2$ recyclé.

6. Boissons obtenues par le procédé selon les revendications 1 à 5.

## Patentansprüche

1. Verfahren zur Modifikation von Getränken, die ausgehend von alkoholischen Getränken von der Gärung von Früchten erhalten wurden, deren Gehalt an Alkohol beträchtlich vermindert wurde, deren Geschmacks- und Geruchsqualitäten jedoch durch Extraktion des Alkohols mittels flüssigem $CO_2$ nicht verändert wurden, dadurch gekennzeichnet, daß es wenigstens zwei Extraktions- und Isolierungsphasen der Extrakte unter isobaren und isothermen Bedingungen umfaßt, wobei die erste zu einem Extrakt, reich an aromatischen Substanzen führt, welcher in das entalkoholisierte Getränk wieder eingeführt wird, und die zweite zu einem alkoholischen Extrakt, der entfernt wird, führt.

2. Verfahren gemäß Anspruch 1, dadurch gekennzeichnet, daß der Druck zwischen 35 und 90 bar beträgt und die Temperatur zwischen 0 und 32° C beträgt.

3. Verfahren gemäß Anspruch 1, dadurch gekennzeichnet, daß in der ersten Phase die Masse an flüssigem $CO_2$, welche mit dem zu behandelnden Getränk in Kontakt gebracht wird, unterhalb des dreifachen Gewichts der Menge des genannten Getränks liegt, und daß in der zweiten Phase die Masse an flüssigem $CO_2$, die mit dem Getränk, das von der ersten Phase kommt, in Berührung gebracht wird, unterhalb dem Hundertfachen des Gewichts der zu behandelnden Getränkemenge liegt.

4. Verfahren gemäß Anspruch 1, dadurch gekennzeichnet, daß man das flüssige $CO_2$, das mit den aromatischen Produkten und/oder Alkohol beladen ist, im Verlaufe der zwei aufeinanderfolgenden Extraktionsphasen durch Einführen von Kalorien abtrennt und daß man das gereinigte und wieder verflüssigte $CO_2$ rezykliert.

5. Verfahren gemäß Anspruch 1, dadurch gekennzeichnet, daß die Wärme, welche zur Verdampfung des $CO_2$-Lösungsmittels, das sich mit aromatischen Produkten und Alkohol beladen hat, notwendig ist, durch jedes bekannte Mittel mit der Wärme, welche während der Verflüssigung des rezyklierten $CO_2$ absorbiert wird, ausgetauscht wird.

6. Getränke, erhalten nach den Verfahren gemäß den Ansprüchen 1 bis 5.

0 077 745

## Claims

1. A process for modifying beverages obtained from alcoholic beverages produced by fruit fermentation, whose alcohol content has been considerably reduced but whose flavour and olfactory qualities have not been altered by extracting the alcohol by means of liquid $CO_2$, characterised in that it comprises at least two steps for extracting and separating the extracts under isobaric and isothermal conditions, the first step resulting in an extract rich in aromatic substances which will be reincorporated in the dealcoholised beverage and the second in an alcoholic extract which will be removed.

2. A process according to Claim 1, characterised in that the pressure is between 35 and 90 bars and a temperature between 0 and 32° C.

3. A process according to Claim 1, characterised in that in the first step the weight of liquid $CO_2$ placed in contact with the beverage to be processed is less than three times by weight the quantity of the said beverage and that in the second step the weight of the liquid $CO_2$ placed in contact with the beverage originating from the first step is less than 100 times by weight the quantity of the beverage to be processed.

4. A process according to Claim 1, characterised in that the liquid $CO_2$ which has absorbed the aromatic products and/or alcohol during the 2 successive extraction steps is separated by supplying thermal energy and that the purified and reliquefied $CO_2$ is recycled.

5. A process according to Claim 1, characterised in that the heat required for the evaporation of the solvent $CO_2$ which has absorbed aromatic products and alcohol is exchanged by any known means with the heat absorbed during the liquefying of the recycled $CO_2$.

6. Beverages obtained by the process according to Claims 1 to 5.

7

Pression en At

T°C

60    500 / 300 / 200 / 140    100 / 90 / 80 / 70 / 60 / 50

40

20    A    B

0

- 20

0,95    1    1,05    1,10    1,15    1,20    1,25

Entropie    Kcal / grd. Kg

(0,24 Kj / grd. Kg)

**0 077 745**

VIN INITIAL

EXTRAIT

RESIDU